# EUROPEAN PATENT APPLICATION

(11) **EP 1 850 285 A1**
(43) Date of publication of application: **31.10.2007**
(21) Application number: 07008123.7
(22) Date of filing: 20.04.2007
(51) Int. Cl.: G06Q 30/00

(54) **Electronic commerce system**

(30) Priority: 25.04.2006 JP 2006120399
(71) Applicant: Furuno, Shigeru, Tokushima-shi Tokushima (JP)
(72) Inventor: Furuno, Shigeru, Tokushima-shi Tokushima (JP)
(74) Representative: Müller - Hoffmann & Partner

(57) **Abstract**

Electronic commerce system in which a purchaser accesses a seller's server via a communication network from a communication terminal and purchases a commodity by operating a commodity selection view displayed on the communication terminal. The commodity selection view is of matrix-type and comprises a common section part showing therein common items for a plurality of commodities to be sold, a matrix section table constituted by a plurality of cells in row and column arrangement, a first row and a first column of the matrix section table are filled in a first selection condition information and a second selection condition information respectively, a selection operation part for receiving necessary input data is provided in each of the cells except for the first row and the first column, and the commodity selection view is provided with a cart transfer button for transferring and storing a purchase information into a shopping cart for purchase.

## Description

### FIELD OF THE INVENTION

The present invention relates to improvement of electronic commerce system in which a purchaser accesses a seller's server via a communication network by operating a communication terminal and orders a commodity and more particularly relates to an electronic commerce system which offers facility for a purchaser so as to easily select a commodity.

### PRIOR ART

Electronic commerce system using the Internet such as BtoB (business to business) and BtoC (business to consumer) has been recently executed by several companies and stores.

For example, in case of an electronic book store site, when a user accesses the book store by operating a communication terminal such as a personal computer and inputs and specifies a keyword like an author's name on a display, the site of the store searches a book data base based on the keyword and the searched books are shown in a list on the display of the requesting user's personal computer. Then, the user can select and order his desirable book on the list.

Further in case of an electronic stationery store site, an objective group of stationery is selected by a category search and a user selects a desirable stationery from the group.

These sites freely use the database technology and a user can show an objective commodity or a group of similar commodities in a list on the display of the personal computer by searching the database.

Still further, in an electronic commerce system using the Internet, a virtual shopping mole has been widely used by which a small-scale firm or shop who does not have his own system can easily open a store.

In such a virtual mall, a group of objective commodities and a virtual shop dealing such commodities are displayed in a list by a category search in order that a purchaser rapidly finds out his objective commodity or virtual shop. When the purchaser selects a commodity from the list, the shop display of the virtual shop dealing with the commodity is shown on the user's personal computer.

The shop display of each virtual shop is shown on the display of the user's personal computer as a virtual commodity shelf which is a commodity layout for each shop designed by the back-office (shop manager).

As mentioned above, these electronic commerce systems make a purchaser find out a desirable commodity group or a desirable virtual shop by a keyword search or a prepared category limitation.

The following document describes an electronic commerce system in which a shop or commodity is searched per area from a plurality of affiliate retail stores.
[Patent Document 1] JP-A-2002-169983

However, in a BtoB commerce, if a purchaser is a retail shop like a cake shop or a restaurant, he usually purchases a specific material from a specific dealer like a wholesale store who deals with such material. Therefore, he does not need to search the commodity group or the virtual shop as mentioned above and he does not use such search function at present. Such a purchaser rather requires a system in which many different commodities can be selected and ordered at one time on the commodity selection view.

User can rapidly search in the .above-mentioned electronic commerce site and virtual mall until he finds out a desirable commodity group or virtual shop, however, it does not satisfy a purchaser of BtoB system.

In a virtual mall assuming BtoC, it is advantageous that each seller of a virtual shop freely designs a commodity layout, however, it arises such disadvantage that a person who is inexperienced in the Web design may design a bad-order layout. When the shop is found out by a commodity search in the virtual mall, a purchaser who sees the bad-order layout may hesitate to order.

Accordingly, in either case of BtoB or BtoC, it is more important for making the electronic commerce successful to provide an in-order commodity layout which facilitates commodity selection than to freely use the search technology of commodity database.

### SUMMARY OF THE INVENTION

The present invention is proposed to solve the above-mentioned problems and the object is to provide an electronic commerce system in which commodities are displayed to be easily selected.

The present invention proposes an electronic commerce system in which a purchaser accesses a seller's server via a communication network from a communication terminal and purchases a commodity by operating a commodity selection view displayed on the communication terminal, wherein the commodity selection view is of matrix-type and comprises a common section part showing therein common items for a plurality of commodities to be sold; a matrix section table constituted by a plurality of cells in row and column arrangement, a first row and a first column of the matrix section table are filled in a first selection condition information and a second selection condition information respectively, a selection operation part for receiving necessary input data is provided in each of the cells except for the first row and the first column; and the commodity selection view is provided with a cart transfer button for transferring and storing a purchase information into a shopping cart for purchase.

In the preferred embodiment, the first selection condition information is displayed on the first row in the matrix section table and the second selection condition information is displayed on the first column in the matrix section table.

According to the present invention, the commodity selection view is provided under the lowest commodity category selection view, which is constituted in hierarchical structure by at least one commodity category selection view.

Further according to the present invention, the commodity category selection view shows a category arrangement display part in which commodity category selection buttons are provided in matrix arrangement in connection with information showed in the category arrangement display part.

Still further according to the present invention, a commodity map view is further provided which shows a hierarchical structure constituted by the commodity category selection views and the commodity selection views and is provided with a calling button therein for arbitrary selection of one of the views.

Further according to the present invention, the commodity selection view is further provided with an estimation button, each cell of the matrix section table shows a unit price of commodity and is further provided therein with an input window for entering number of commodities to be purchased by the purchaser as the selection operation part; and further the seller's server is so constructed to calculate and display the sum price for commodities selected by the purchaser when the purchaser operates the estimation button.

Further according to the present invention, the selection operation part provided in each cell of the matrix selection table is capable of setting to be not displayed.

Further according to the present invention, information of commodities for sale is capable of setting to be changed for any change in storage number or in sales conditions of commodities for sale.

According to the present invention, a view shows a matrix section table which shows a commodity information specifying the attribute of commodity in a row and in a column separately together with a selection operation part for receiving necessary input data, thereby making a purchaser easily select a commodity by means of arranged two-dimensional matrix section table and further making a purchaser select plural commodities at the same time.

A common section part is provided on the same view as the matrix section table, so that the common information for each commodity in a cell can be shown in the common section part and the information shown in each cell is reduced, thereby offering a simple and viewable commodity selection view. Further, the common information for a plurality of related commodities is collectively shown, so that the information to be registered per each commodity can be reduced, thereby saving registering operation of commodity information on a commodity shelf in a back-office view.

If the present invention is adopted into a virtual mall, each virtual mall is only required to layout the commodities on each cell of the matrix section table and it does not need to order the design of commodity layout to a Web designer. Therefore, the commodity layout can be designed by the seller only by determining the attribute of the matrix section table to be shown on the commodity selection view.

Further according to the present invention, a commodity cell selection view is designed to be selected and shown via the selection view at the lowest hierarchy of a commodity category selection view to select a commodity category, so that a purchaser can show a desirable commodity selection view only by switching the view from an upper hierarchy to a lower hierarchy.

Still further according to the present invention, the commodity category selection view is designed to show a category arrangement display part in which a commodity category selection button is arranged to be displayed in a row and a column. Therefore, the category selection is facilitated like commodity selection and a purchaser can select a commodity while watching a list in matrix throughout a plurality of commodity category selection views to commodity selection views.

A category arrangement display part in which category attribute is separately shown in a row and a column can be also shown, thereby enabling the commodities to be classified by plural attributes to be arranged in a viewable and selectable information by means of the category arrangement display part of the commodity category selection view and the matrix section table of the commodity selection view.

The matrix section table is for specifying a commodity by the combination of two attributes. By providing the category arrangement display part, if a commodity group is specified by the combination of more than three attributes, two attributes are allotted to a row and a column and other category can be allotted to a category arrangement display part. Therefore, if a commodity group is classified by the combination of plural attributes, it can be dealt with a matrix section table by providing deeper hierarchies for the category selection view.

Further according to the present invention, a commodity map view is provided which shows a hierarchy structure of the commodity category selection view, thereby easily enabling to understand commodity classification. Still further a calling button for each view is provided, thereby facilitating easy calling-up of an objective view.

According to the present invention, each cell shows a unit price of the commodity and has a window for inputting the number of purchasing commodity, thereby enabling to order plural numbers of the same commodity, which is suitable for BtoB system. Further, an estimation button is provided so as to calculate the sum, so that the estimation of goods in plural kinds and plural numbers which are to be ordered at the same time can be obtained at once.

Further according to the present invention, the selection button or an input window for the numbers provided for each cell is designed not to be shown, thereby prohibiting selection of sold-out commodities.

Still further according to the present invention, a different display mode is capable from that of other cell when there causes any change in storage number and sales condition, thereby displaying the commodity information per each cell.

### BRIEF DESCRIPTION OF THE DRAWINGS

Fig.1 is a schematic diagram of an electronic commerce system of the present invention.

Fig.2 shows an example of functional (view) structure of an electronic commerce system of the present invention.

Fig.3 shows a basic structure of an electronic commerce system of the present invention.

Fig. 4 shows a structure of a commodity database of an electronic commerce system of the present invention.

Fig.5 shows a display example of a commodity selection view.

Fig.6 shows another display example of a commodity selection view.

Fig.7 shows a still other display example of a commodity selection view.

Fig.8 shows an example of view hierarchy structure of an electronic commerce system of the present invention.

Fig.9 shows an example of a commodity category selection view (large classification).

Fig.10 shows an example of a commodity category selection view (middle classification).

Fig.11 shows an example of a commodity category selection view (small classification).

Fig.12 shows an example of a commodity selection view.

Fig.13 shows other example of a commodity selection view.

Fig.14 shows an example of a cart display view.

### DETAILED DESCRIPTION OF THE INVENTION

Now, the embodiments of the present invention are explained referring to the attached drawings.

### [Embodiment 1]

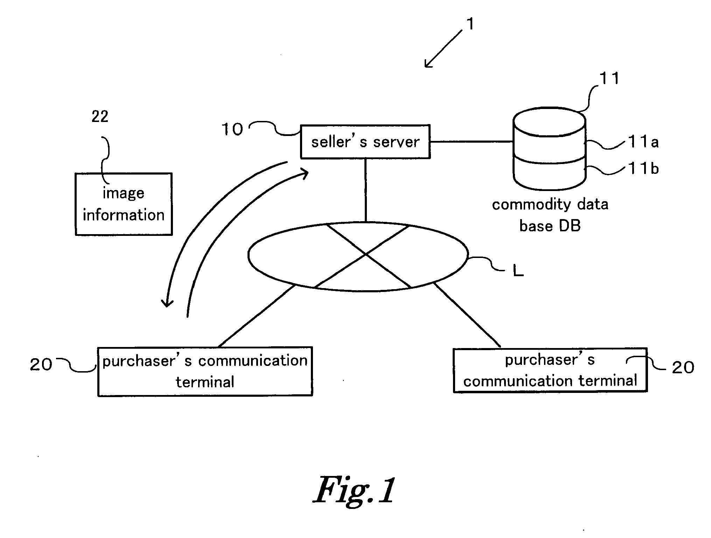

Fig.1 is a schematic diagram of an electronic commerce system of the present invention.

According to an electronic commerce system 1 of the present invention, a user accesses a seller's server 10 from a communication terminal 20 such as a personal computer via a communication network L such as the Internet and executes an electronic commerce. The information on commodities to be sold is registered in a commodity database 11 in the seller's server 10.

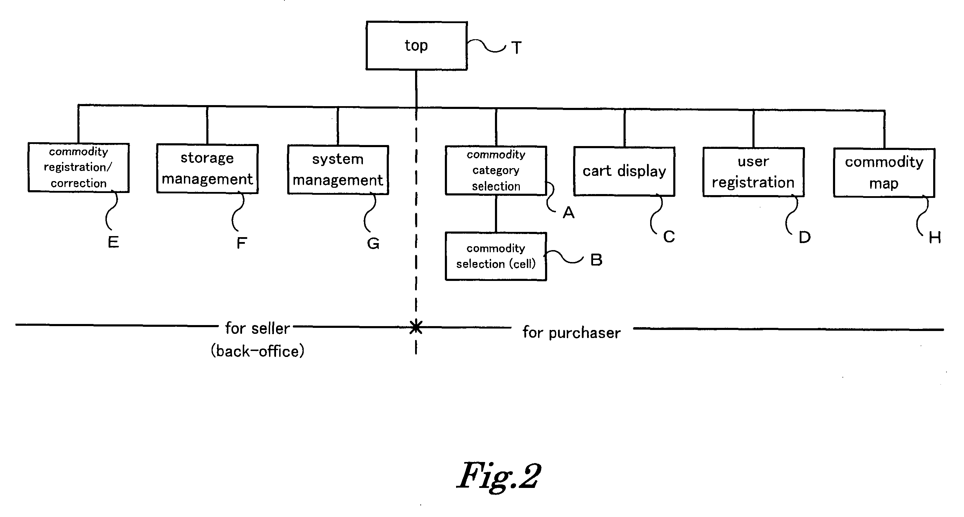

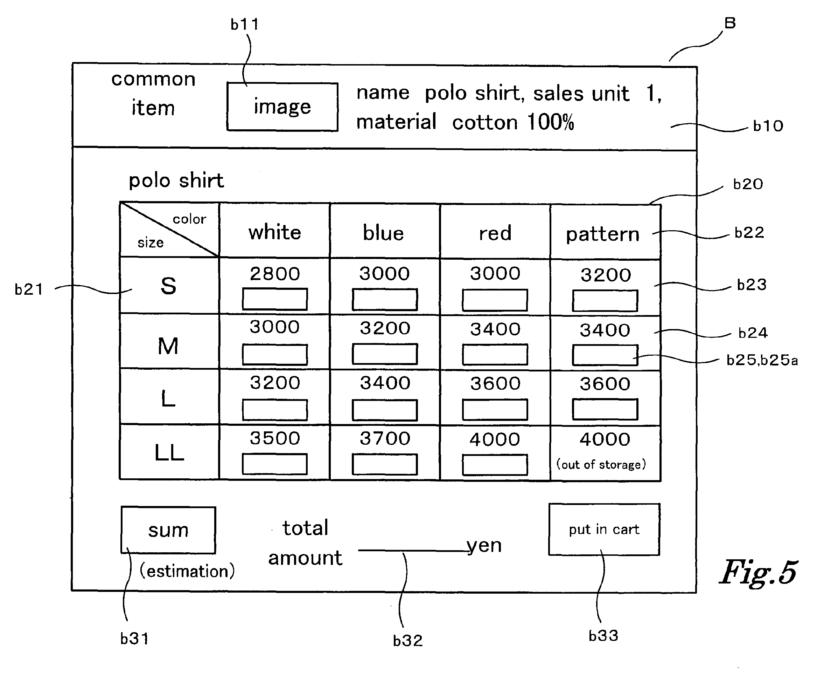

The seller's server 10 is constructed as a Web server in which when a purchaser accesses the server 10 by operating the communication terminal 20, the commodity information such as a unit price of an objective commodity that he expects to purchase is taken out of the commodity database 11, a view information 22 of a commodity selection view B (see Fig.2) including a matrix section table b20 in which cells are two-dimensionally arranged (shown in Fig.5 and so on) is edited, the view information 22 is sent to the purchaser's communication terminal 20, the view information 22 is downloaded via a browser (not shown) to be shown on the display view of the communication terminal 20, thus the commodity can be selected by operating the commodity selection view B.

The commodity database 11 is divided per commodity and comprises a commodity specific information 11a at least having a commodity category attribute, a commodity attribute and unit price of commodity, and a commodity group common information 11b which is common to plural related commodities.

When a purchaser operates his communication terminal 20, as to a specific commodity group comprised of plural related commodities, the seller's server 10 shows a common item based on the commodity group common information 11b in a common section part b10 on the commodity selection view B (see Fig.5) and shows a matrix list which arranges unit prices of plural related commodities included in the group in the matrix section table b20 on the commodity selection view B (see Fig.5 and so on) . A commodity is selected on the commodity selection view B, the number of commodities to be purchased is inputted, and a cart is stored, then the purchase information is returned to the seller's server 10.

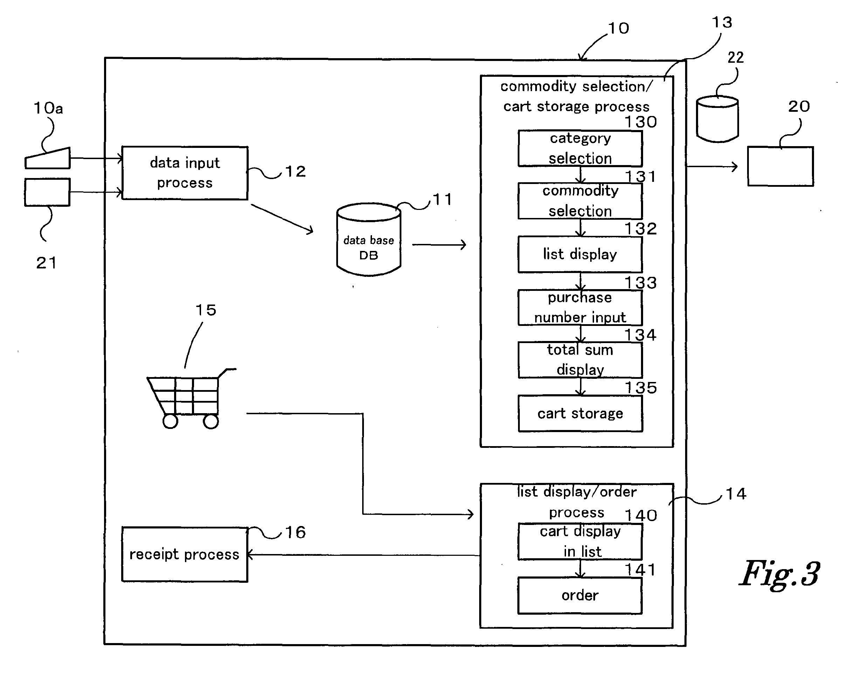

The function and process of the present invention are explained referring to Fig.2 and Fig.3.

Fig.2 shows an example of functional (view) structure of an electronic commerce system of the present invention. The system has, under a top page T as a back-office function (view) for seller, a commodity registration and correction function (view) E capable of registering and correcting the commodity information, a stock management function (view) F, a system management function (view) G for controlling and maintenance of the system, and further has, as a function (view) for purchaser, a user registration view D, a commodity category selection view A, a commodity selection view B capable of ordering commodity in a matrix list, a cart display view C in a list for displaying the commodity information stored in a cart, and a commodity map view H showing a hierarchy structure of all the commodity categories and the commodities.

The commodity category selection view A is divided in multiple hierarchies like a large classification, a middle classification and a small classification, as mentioned later.

Each view for seller E, F, and G is called up by inputting a specific user ID and a password for seller (or for controller) on the seller's server or a terminal connected to the Internet L. The view for purchaser is called up when a purchaser operates the communication terminal 20 such as his personal computer connected to the Internet.

When the present invention is applied to a virtual mall, the commodity registration and correction view E may have such function that a seller designs the commodity category selection view A and the commodity selection view B shown on the purchaser's communication terminal 20 in addition to the functions of registering and correcting the commodity information. Namely, the layout design of the commodity shelf of the virtual mall may be executed while registering and correcting the commodity.

These Web views are prepared by the seller's server 10 as a view information file described in a description language like HTML and XML or are dynamically produced upon request from a purchaser. The browser in the communication terminal 20 accesses to the server 10 via the Internet L to download a required view information file 22 and a view is shown on the display of the communication terminal 20 according the content of the downloaded file. The commodity selection view B as mentioned above is also produced as a view information file 22.

As the Web view realizes GUI (Graphical User Interface), if several functions of the system are constructed with these Web views, data input from the communication terminal 20, transmission to the server 10 and page switch can be easily done via a display view in addition to display of information.

Further, upon an operation request from a purchaser, CGI (Common Gateway Interface) or SSI (Server Side Include) is driven to take out the requested information from the commodity database 11, the view information file 22 of the Web view based on the information is dynamically produced, thereby enabling to display on the communication terminal for purchaser 20. Namely, the seller's server 10 produces the view information file 22, in which variable data is included in the view information of a fixed picture prepared in advance, to be shown on the purchaser's communication terminal 20 and sends the produced file to the requesting communication terminal 20.

For example, after the communication terminal for purchaser 20 calls up the commodity category selection view A, a specific commodity category is selected from the menu, then the seller's server takes out the information on the commodity group of an objective category from the commodity database 11 based on the selection, includes several kinds of commodity information as variable data in the commodity selection view B including a common section part b10 and a matrix section table b20, mentioned later, to produce the view information file 22, thereby sending the view information file 22 to the purchaser's communication terminal 20 to be shown.

Fig.3 shows a basic structure of an electronic commerce system 1 of the present invention. The figure shows a commodity selection/cart storage process 13, being an essential part of the present system 1, which is executed via a commodity category selection view A and a commodity selection view B, a list display/order reception process 14 which is executed via a cart display view C, a commodity database 11, a data input process 12 for registering and correcting commodity information in the commodity database 11, a cart (memory area) 15 for memorizing and storing the commodity by selecting operation, and a reception process 16 which is operated upon receiving an order. However, the figure omits processes relating to a user registration view D, a stock management function F, and a system management function G, several view structure information files constructed with HTML files stored in advance, communication process, and browsers which are operated by the purchaser's communication terminal 20. Each function is explained hereinafter respectively.

In the data input process 12, the commodity information which is registered and corrected via the commodity registration/correction view E from a terminal 10a connected to the seller's server 10 is stored, revised and registered in the commodity database 11. In case of a virtual mall, registration and correction operations are executed from the terminal 10a connected via the Internet L.

The data input to the commodity data base 11 is not limited to the registration and correction via the above-mentioned view, but may be a batch processing such that the commodity information data provided via a communication terminal 21 of a maker or a distributor is rendered to format conversion to be a record information of the commodity data base 11 and is edited.

In the commodity selection/cart storage process 13, while a purchaser operates the multi-hierarchy commodity category selection view A with the communication terminal for purchaser 20, the commodity selection view B of a desired commodity group is shown, the common section part b10 and the matrix section table b20 are shown on the commodity selection view B of the desired commodity group, and the purchaser inputs a scheduled purchase number of the desired commodity in each cell of the matrix section table b20. Then the total amount of the commodities of which number is inputted is calculated and shown and the selected commodities are stored in the cart 15 when the purchaser stores the cart thereafter (steps 130 - 135) .

In the list display/order reception process 14, the cart display view C is shown on the communication terminal for purchaser 20 and the order of commodity stored in the cart 15 is accepted when an order operation is executed on the view (steps 140, 141).

In the reception process 16, a predetermined order acceptance process, like preparation of order sheet and confirmation of stock, is executed based on the order information accepted at the list display/order reception process 14.

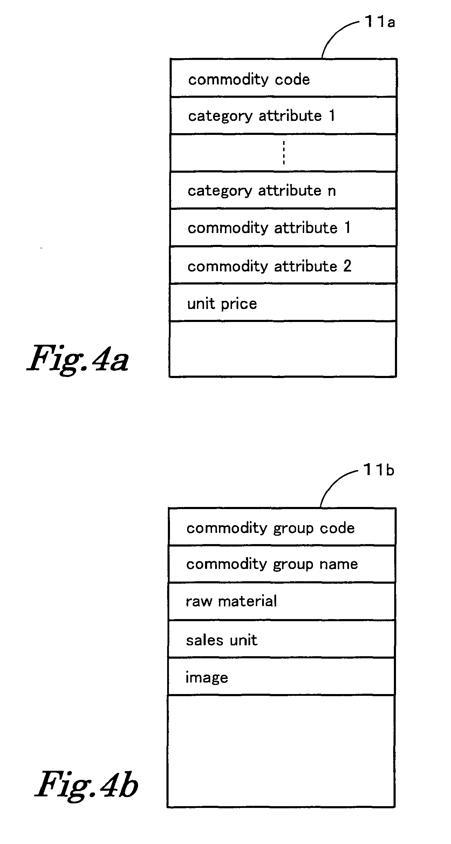

The commodity database 11 includes record containing at least the items shown in Fig.4. Fig.4a shows the item content of the commodity specific information record 11a and Fig.4b shows that of the commodity group common information record 11b. Here clothing items are exemplified as commodities for electronic commerce.

The commodity specific information 11a is produced per an item and includes information like a commodity code, a commodity category attribute 1 ··· , a commodity category attribute n, a commodity attribute 1, a commodity attribute 2, a sales unit price and the like.

The commodity category attribute includes a large classification attribute for example lady's clothes and men's clothes, a middle classification attribute for example a business suit and a business shirt in case of men's clothes, and a small classification attribute for example a collar shape, color and pattern in case of a business shirt. The commodity attribute includes two attributes, namely the commodity attribute 1 (row attribute) is the collar size and the commodity attribute 2 (column attribute) is the sleeve length in case of a business shirt.

The commodity group common information 11b is registered with the common item of the commodity group which is grouped in the commodity category in the bottom hierarchy. The record item includes a commodity group code, a commodity group name, a raw material, a sales unit, a common commodity image and the like. The commodity category in the bottom hierarchy is positioned at the lowest hierarchy among multi-hierarchy commodity category selection view A, namely it is the commodity category directly above the commodity selection view B.

The commodity database 11 is not limited to the above-mentioned record classification or record structure, however, it may be others. It is preferably constructed so as to take out the commodity classification information and the sales unit price per each commodity.

Fig.5 - Fig. 7 show a display example of the commodity selection view B.

Fig.5 shows one example of the commodity selection view B constituting the commodity cell selection view.

The commodity selection view B includes a common section part b10 for showing the common information of the commodity group (a polo shirt is shown here) which is grouped in the commodity category at the lowest hierarchy, a two-dimensionally arranged matrix section table b20 in which a column item attribute is color and a row item attribute is size, an estimation button b31, a total amount display b32, a cart transfer button b33 and the like.

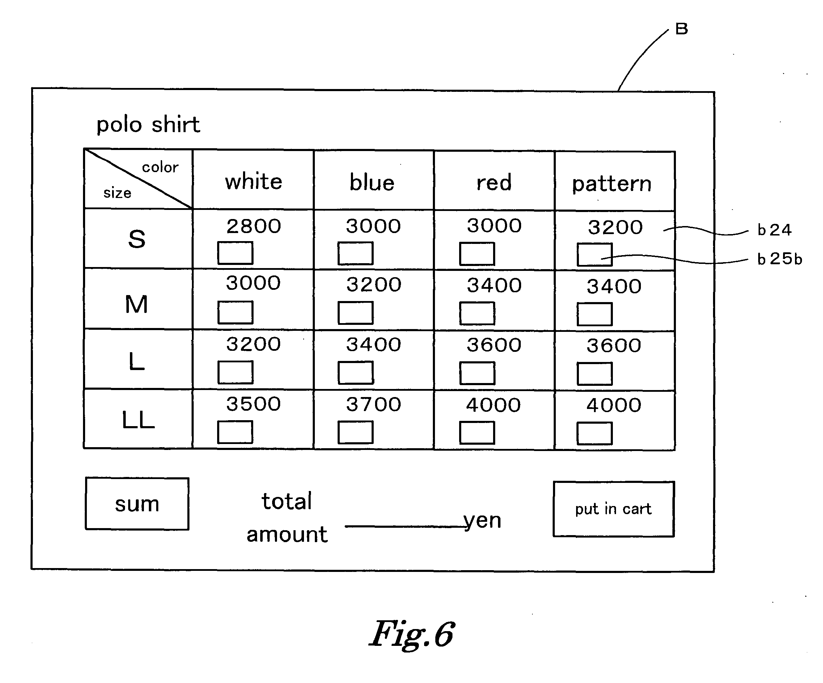

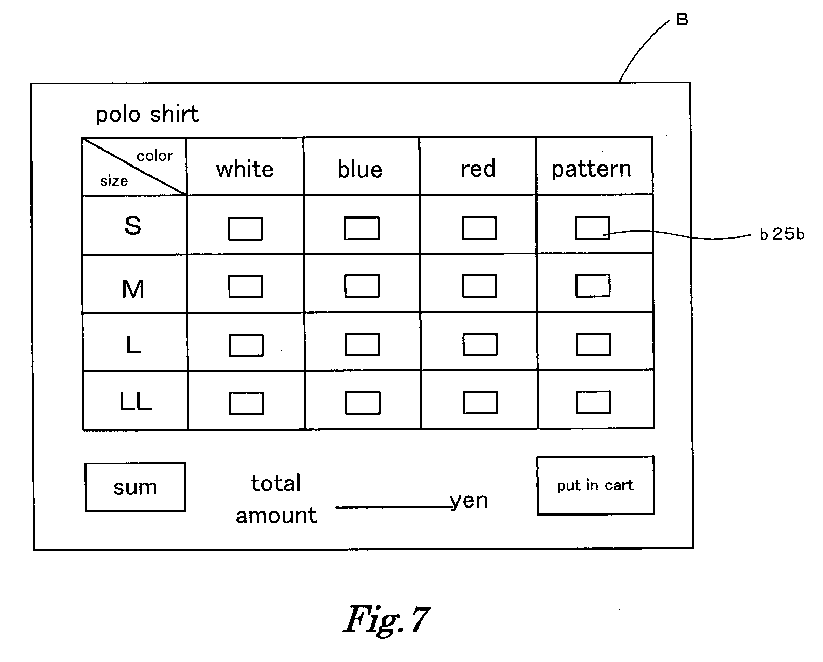

The commodity selection view B shown in Fig. 6, Fig. 7 and Fig.l2, as explained later, omits the common section part b10.

The estimation button b31 and the total amount display b32 may not be provided on the commodity selection view B and may be shown on another view after selecting the commodities and the purchasing number. If the estimation button b31 and the total amount display b32 are incorporated into the commodity selection view B, a purchaser can operate while watching the view information and confirming the selected commodities, thereby facilitating the operation.

The common section part b10 shows common items like a commodity sample image b11, a commodity name, a raw material, and a sales unit which are taken out from the commodity group common information record 11b of the commodity database 11. The commodity sample image b11 may be a symbol or a painting other than a photograph.

Item display section like a row attribute b22 and a column attribute b21 is provided for the matrix section table b20 and the commodity information specified separately by the commodity attribute in rows and columns is shown in each cell b23 which is the intersection of the row and the column. The upper line in each cell b23 shows a unit price b24 and the lower line shows an input window b25a for the number to be purchased. The input window b25a is the input operation area capable of inputting the purchasing number and is a selection operation part b25 for receiving necessary input data for commodity. The purchasing number may be directly inputted into the input window b25a by a numeric keypad or may be selected from the pull-down menu which shows the multiple numbers of the sales unit. A purchaser can select the commodity in the cell b23 by inputting the number in the input window b25a.

Namely, on the matrix section table b20, the first row is provided for displaying a row attribute b22 which is the first selection condition and the first column is provided for displaying a low attribute b21 which is the second selection condition. In each cell b23 in the matrix section table b20 other than the first row and the first column is provided with a selection operation part b25 for receiving necessary input data.

The commodity information shown with a symbol, a painting or a photography may be shown in the matrix section table b20. If a symbol of colored polo shirt is shown in the color item section b22 or the column is painted with each color, a purchaser can input his selection without mistake.

The input window b25a in each cell b23 may not be shown in case of sold-out or no-stock as shown in Fig.5. Checking the inventory status in the back-office, the display/non-display may be set while designing a view layout or when a purchaser accesses the view, the window b25a may be shown referring to the storage data (not shown) stored in the seller's server 10 in real time. Instead of non-display, the display may by differed by the background color or a balloon display.

If the display is differed per a cell b23, a purchaser easily knows the commodities which are going to be sold out soon, of which prices are changed, or of which sales conditions are changed.

A purchaser inputs a scheduled purchase number in the input window b25a of the cell b23 for a desired commodity in the matrix section table b20 and operates the estimation button b31 after he calls up the view B, the information for identifying the selected commodity and the purchase number are sent back to the seller's server 10. In the server 10, the purchased total amount is calculated based on the scheduled purchase number and the unit price for the selected commodities to be summed up with the amount of the already selected commodities, and the view information 22 for showing the sum price on the total amount display b32 is sent to the communication terminal 20. The communication terminal 20 which receives the view information 22 revises the view by the operation of browser. The view is revised each time such operations are repeated, thereafter when the purchaser operates the cart transfer button b33, the commodity information for the commodity which has been already inputted its purchase number is sent to the seller's server 10 to be stored in the cart 15.

When a purchaser selects over a plurality of commodity selection views B, the commodity information is sequentially memorized and stored in the same cart 15 every time the cart transfer button b33 is operated, and the grand total amount which has been summed up is shown each time the estimation button b31 is operated.

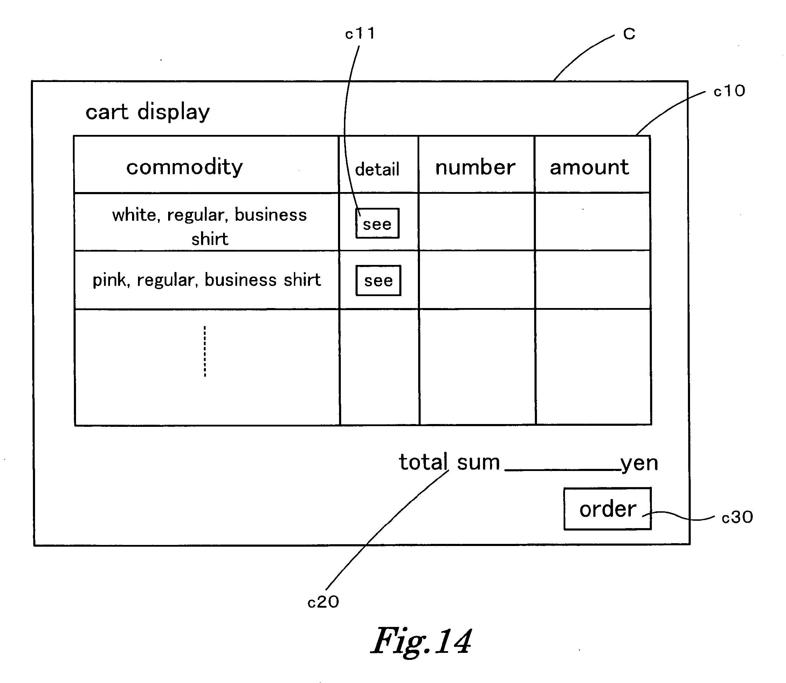

When the cart transfer button b33 is operated, the commodity information is stored in the cart 15 and also the view jumps to the cart display view C to be shown, as explained later referring to Fig.14.

In this embodiment, calculation of the total amount is executed in the seller's serer 10, however, the information which includes an arithmetic program for obtaining the total amount may be sent when the commodity group is selected on the commodity category selection view A and the view information 22 is sent. Namely, when a purchaser selects commodities, inputs purchase number, and operates the estimation button b31, calculation is not requested to the seller's server 10 and the total amount is calculated with the total sum operation logic (program) included in the view information 22 which has been downloaded in the communication terminal 20. Further, if the communication terminal 20 executes operation, the command by the estimation button b31 may be omitted.

Thus, according to the commodity selection view B of the present system 1, the matrix section table b20 on the view includes the cell b23 which shows the commodity information such as unit price of the commodity together with the input window b25a for inputting the purchase number, the commodity attributes being separately specified per a row and a column. Therefore, a purchaser can easily select the commodity and can also select a plurality of commodities at the same time by means of the two-dimensional matrix section table b20, thereby enabling an effective system for a BtoB electronic commerce system.

Specifically, if this system 1 is adopted into a virtual mall, each virtual shop may be only required to allot commodities in each cell b23 of the matrix section table b20. Therefore, it is not required to order the commodity layout design to a Web designer and the seller can design commodity shelf layout only by determining the attribute of the matrix section table b20 to be shown on the commodity selection view B.

Further, the common section part b10 such as images is shown on the same commodity selection view B as the matrix section table b20 separately from the matrix section table b20 so that the common item like a sample image b11, a raw material and a manufacturer can be easily seen and confirmed on the same view as that for commodity selection, thereby rendering convenient.

The commodity selection view B comprises the common section part b10 which puts together the common items for a plurality of related commodities and the matrix section table b20 relating to each commodity. Accordingly, the commodity specific information and a commodity group common information can be provided separately in the record of the database 11 as mentioned above in addition to the view display, and the commodity registration/correction view E corresponding to the data is similarly constructed. Therefore, the information to be registered for each commodity can be reduced, thereby saving registration operation of the commodity information on the commodity shelf in the back-office.

Fig.6 and Fig.7 show other display examples of the commodity selection view B.

In the display examples, a check box b25b is provided in each cell b23 instead of the input window b25a for purchase number. It is effective in such a case that plural numbers of the same commodity cannot be selected because the number of the commodities is limited. Fig.6 shows an example including a unit price b24 and Fig.7 shows an example without a unit price.

A radio button may be provided as the selection operation part b25 instead of the purchase number input window b25a and the check box b25b so as to select only one of the cell b23 in the matrix section table b20.

Next, the hierarchy structure of the view relating to commodity selection is explained.

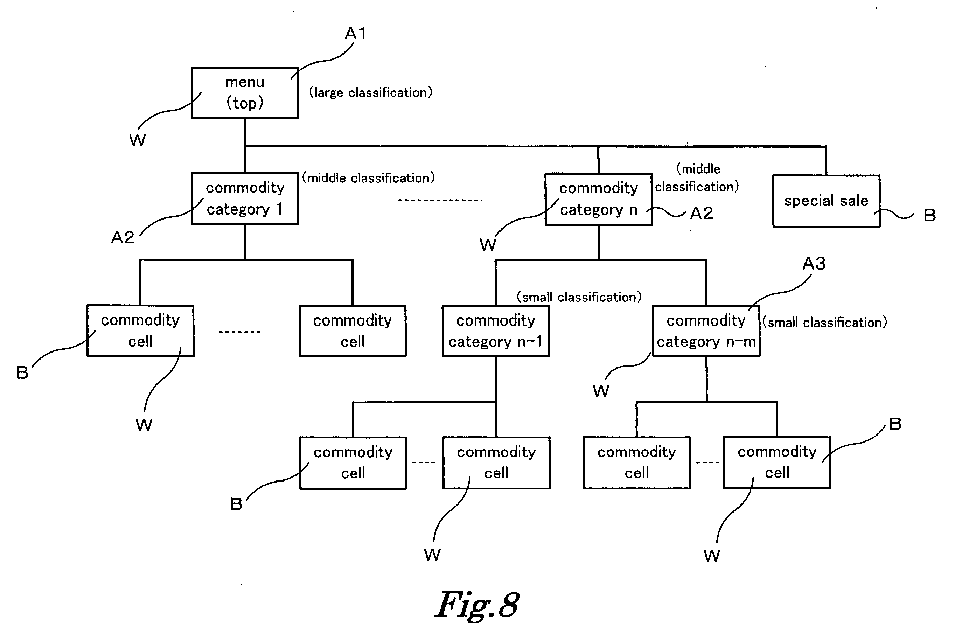

Fig.8 shows an example of view hierarchy structure. The view showing the hierarchy structure is shown on the commodity map view H.

On the commodity map view H, the identification information such as the commodity category, the commodity name and images is allotted for each call button w for calling up the commodity category selection view A or the commodity selection view B.

In this example, a commodity group capable of selecting by the two-hierarchy commodity category of a large classification and a middle classification and a commodity group capable of selecting by the three-hierarchy commodity category of a large, a middle, and a small classifications are mixed. In either case, the commodity selection view B is positioned lower than the commodity category selection view A at the lowest hierarchy. Of course, the commodity category selection view A may be one hierarchy or multi hierarchies. The commodity category selection view A at a large classification may be shown as a menu in a top page T.

Further the commodity selection view B for special sale may be provided. If it is provided at a priority position as shown in the figure, better merchandising is promoted.

According to this hierarchy structure, the view is sequentially shown from the upper view to the lower view by switching the view, however, it is not limited to be shown by the hierarchy operation. Corresponding views like the commodity category selection view A or the commodity selection view B can be shown by operating the call button w from the commodity map view H, linking from other view, or by directly inputting the URL. Further, a shortcut button may be provided on the upper hierarchy view like the top page T so as to switch and show the commodity selection view B for eye-catcher commodities.

The view structure with multi-hierarchy classifications may be freely designed by the back-office. For example, if there is a commodity with multi-classification included in a plurality of categories, the commodity selection view B for the commodity may be reached from any routes.

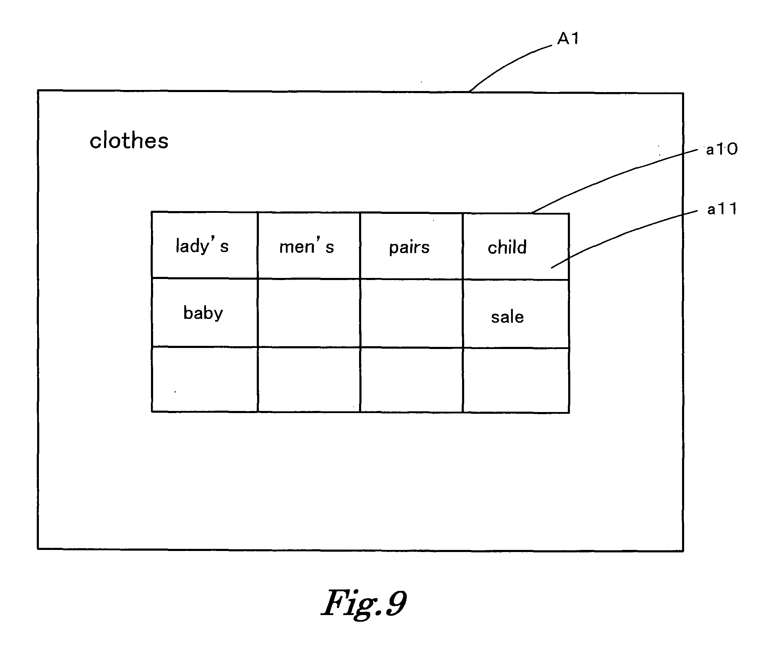

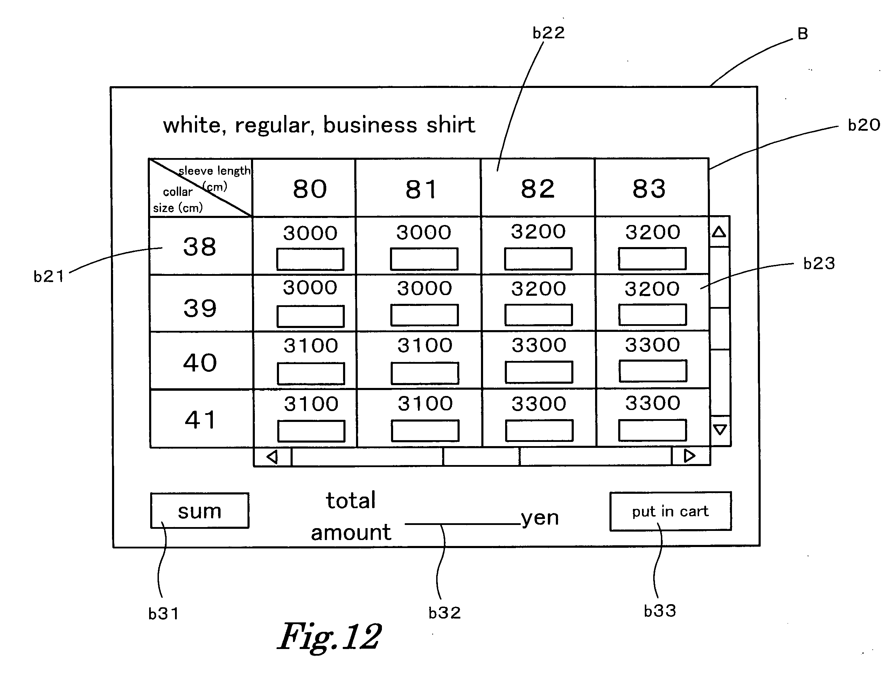

Fig.9 - Fig. 11 show an example of each commodity category selection view A in a large classification, a middle classification and a small classification for showing the commodity selection view B shown in Fig. 12. Here exemplifies a virtual shop dealing clothes.

On the commodity category selection view for a large classification A1, a selection button all corresponding to the commodity category which largely classifies clothes is provided at a category arrange section a10 as shown in the figure. The category arrange section a10 in this example is a table arranged in matrix comprising 3 rows and 4 columns and each cell is allotted with a commodity category such as lady's, men's, pairs, child, baby and for sale.

The category arrange section a10 shown on the view A1 appears to be aligned, however, attributes are not allotted for each row and column. Further, there is no rule of aligning the selection buttons all and the selection button all is sequentially allotted from light to left per a row. Of course, the selection button all may be arranged with spaces.

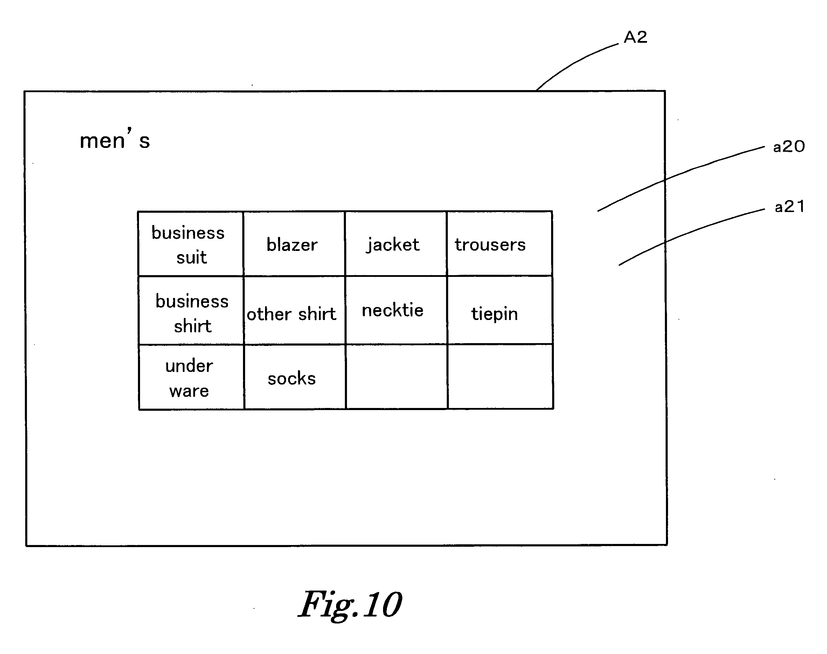

If the selection button a11 for men's is selected from the category arrange section a10, a view is switched to the commodity category selection view for middle classification A2 shown in Fig.10.

On the commodity category selection view for middle classification A2, a selection button a21 corresponding to the commodity category which further classifies men's clothes is aligned in a category arrange section a20 as shown in the figure. The category arrange section a20 in this example is a table arranged in matrix comprising 3 rows and 4 columns and each cell is allotted with a category such as a business suit, a blazer, a jacket, trousers, a business shirt, other shirts, a necktie, a tiepin, an underwear, socks, and the like.

The category arrange section a20 is also constructed such that the selection button a21 of the above ten kinds of the middle classification categories is arranged in a list.

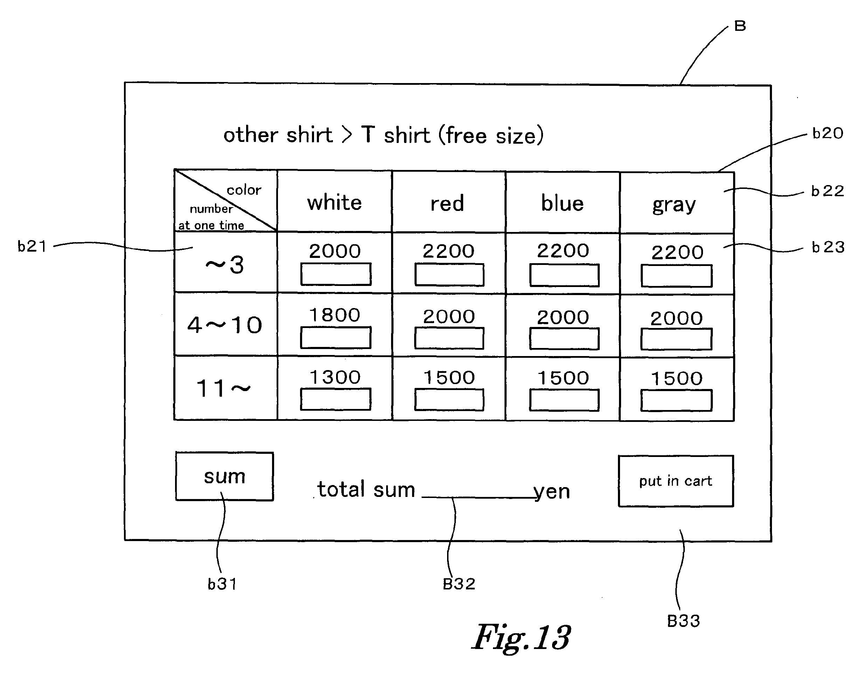

When the button a21 for business shirt is selected in the category arrange section a20, a view is switched into a commodity category selection view for small classification A3 as shown in Fig.13.

On the commodity category selection view for small classification A3, a category selection button a31 corresponding to the commodity category which further classifies the business shirt is aligned on a category arrange section a30 as shown in the figure. The commodity category selection button a31 is not aligned in appearance on the category arrange section a30, a row item a32 is allotted for a vertical axis, a column item a33 is allotted for a horizontal axis, the category attribute for collar shape is allotted for a row, and the category attribute for color and pattern is allotted for a column. Namely, specifying the row and the column on the commodity category selection view A3, one category can be selected like the commodity selection view B.

When white color and regular collar are selected from the category arrange section a30 for business shirt, a view is switched to the commodity selection view B in Fig.12.

The commodity selection view B in Fig.12, like the above-mentioned commodity selection view B (see Fig.5) includes a common section part b10 (not shown in Fig.12) for showing the common information of the commodity group in the category of white and regular collar business shirt, a two-dimensionally arranged matrix section table b20 having a row attribute b22 of collar size and a column attribute b21 for sleeve length, an estimation button b31, a total amount display b32 and a cart transfer button b33 for operating transfer of commodity into a cart.

The commodity selection operation and system operation on the commodity selection view B are the same as those explained in Fig. 3 - Fig.5.

Accordingly, the commodity selection view B is designed to be selectively shown via a selection view (the commodity category selection view for small classification A3 in this embodiment) at the bottom hierarchy under the commodity category selection view A in which the commodity category is selected, so that a purchaser who visits the Website for the first time can show a desirable commodity selection view B only by sequentially switching the view from the upper hierarchy to the lower hierarchy of the commodity category.

The commodity category selection view A shows the category arrange section a30 which arranges the commodity category selection button a31 at a row and a column, thereby facilitating category selection like commodity selection. Accordingly a purchaser can select commodities while watching a list of cells throughout the commodity category selection view A to the commodity selection view B.

Providing the category arrange section a30, when a commodity group is specified by the combination of more than three attributes, for example four attributes, two attributes can be allotted to a row attribute and a column attribute in the matrix section table b20 and other two attributes can be allotted for the category arrange section a30. Therefore, if a commodity group is classified by the combination of plural attributes, the matrix section table b20 can be adopted by providing deeper hierarchies for the category selection view A.

The category arrange sections a10, a20, a30 may be designed such that the commodity category attribute is allotted for each row and column to be arranged two dimensionally like the matrix section table b20 on the commodity selection view B, categories are arranged under a specific rule, or they are arranged randomly.

In the above mentioned example, the commodity category selection view in small classification A3 is constructed such that two kinds of commodity category attributes are allotted for a row and a column and the commodity selection view B is constructed such that two kinds of commodity attributes are allotted for a row and a column, namely one commodity is selected by the total of 4 kinds of attributes. However, it may be designed such that two attributes in the matrix section table b20 on the commodity selection view B are selected when a purchaser operates with his communication terminal 20. Namely, the matrix section table b20 may be designed freely by a purchaser.

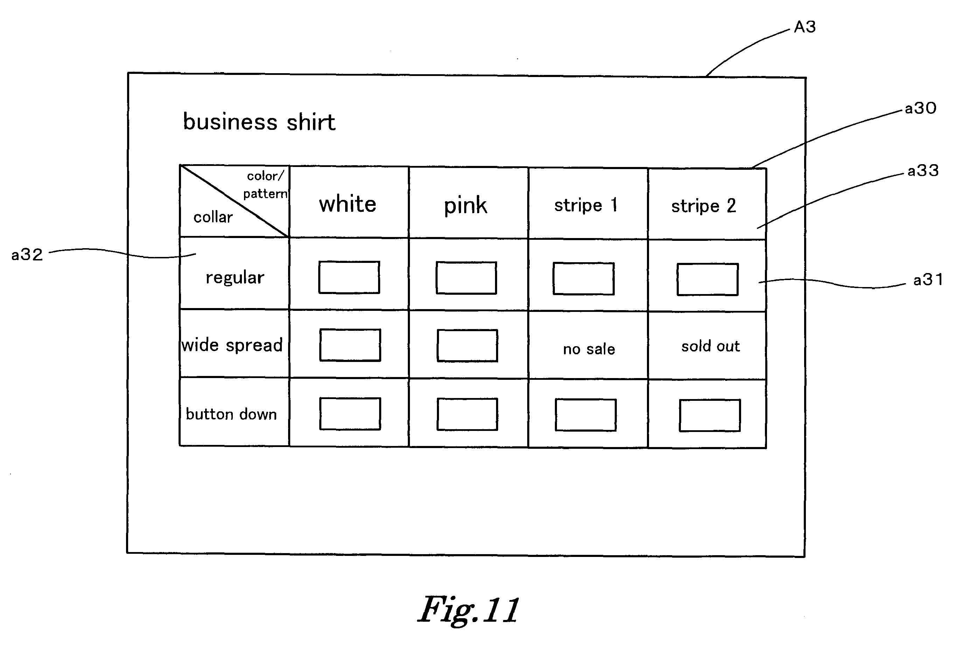

In the examples in Fig.11 and Fig.12, a plurality of commodities with different sizes can be selected from white and regular collar business shirts, so that it is convenient when employee's uniforms of a shop are ordered at the same time. However, if a purchaser is an individual person, his collar size and sleeve length are predetermined and he has to repeat view operations in Fig.11 and Fig.12 when he wishes to select commodities with a plurality of color shapes, colors and patterns, thereby being inconvenient.

However, if the view hierarchy is changeable by a purchaser to show the category arrange section a30 of which row and column attributes are collar sizes and sleeve lengths on the commodity category view for small classification A3 and to show the matrix section table b20 of which row and column attributes are collar shapes, and colors and patterns on the commodity selection view B, a purchaser can select a plurality of commodities on the commodity selection view B.

In order to show a matrix section table b20 by combining the attributes of commodity category and the attributes of commodity, when the commodity database 11 comprises a multidimensional database, the system can be constructed easily.

Fig.13 shows other example of commodity selection view. In this example, the range of purchase number is specified as a row attribute b22 of the matrix section table b20 and the sales price is reduced as the number increases. Such setting of commodity attributes is suitable for bulk buying of shops, communities and enterprises. The range of purchase number may be specified as a column attribute.

Further, business conditions such as payment and delivery of goods may be set at a row or column attribute. For example, payment conditions like a lump-sum cash payment, payment via credit card, payment on delivery and the like are set as a row attribute or a column attribute and the sales price may be differed like the example in Fig.13.

Finally the cart display view C is explained. Fig.14 shows an example of cart display view C.

The cart display view C is shown by operating the cart transfer button b33 on the commodity selection view B. It may be displayed from the top page and so on.

The cart display view C shows in a list the purchase information of all the commodities selected when a purchaser operates the cart transfer button b33 on the commodity selection view B and is automatically shown by view change whenever the cart transfer button b33 is operated on the commodity selection view B.

The purchase information of commodities includes the number, the amount and so on per the commodity selection view B as shown in the figure, and also includes the number, amount and so on per a commodity selected on the commodity selection view B. The number and amount of each commodity may be displayed by operating a breakdown button c11. If the payment conditions and the delivery conditions are settled, they may be also displayed.

Thus the cart display view C is changeably displayed by cart storage operation, so that the content in the cart can be confirmed each time the commodities are selected on the commodity selection view B, thereby quickly executing a series of order operation.

A list c10 of commodity purchase information, a total sum information c20 and an order button c30 are shown on the cart display view C and when the order button c30 is operated, the seller's server 10 accepts and processes the order.

## Claims

1. Electronic commerce system in which a purchaser accesses a seller's server via a communication network from a. communication terminal and purchases a commodity by operating a commodity selection view displayed on said communication terminal, wherein
said commodity selection view is of matrix-type and comprises a common section part showing therein common items for a plurality of commodities to be sold,
a matrix section table constituted by a plurality of cells in row and column arrangement, a first row and a first column of said matrix section table are filled in a first selection condition information and a second selection condition information respectively, a selection operation part for receiving necessary input data is provided in each of said cells except for said first row and said first column, and
said commodity selection view is provided with a cart transfer button for transferring and storing a purchase information into a shopping cart for purchase.

2. The electronic commerce system as set forth in claim 1, wherein said commodity selection view is provided under the lowest commodity category selection view, which is constituted in hierarchical structure by at least one commodity category selection view.

3. The electronic commerce system as set forth in claim 2, wherein said commodity category selection view shows a category arrangement display part in which commodity category selection buttons are provided in matrix arrangement in connection with information showed in said category arrangement display part.

4. The electronic commerce system as set forth in claim 2 or 3, wherein a commodity map view is further provided which shows a hierarchical structure constituted by said commodity category selection views and said commodity selection views and is provided with a calling button therein for arbitrary selection of one of said views.

5. The electronic commerce system as set forth in any one of claims 1 - 4, wherein said commodity selection view is further provided with an estimation button,
each cell of said matrix section table shows a unit price of commodity and is further provided therein with an input window for entering number of commodities to be purchased by said purchaser as said selection operation part, and further
said seller's server is so constructed to calculate and display the sum price for commodities selected by the purchaser when the purchaser operates said estimation button.

6. The electronic commerce system as set forth in any one of claims 1 - 5, wherein said selection operation part provided in each cell of said matrix selection table is capable of setting to be not displayed.

7. The electronic commerce system as set forth any one of claims 1 - 6, wherein information of commodities for sale is capable of setting to be changed for any change in storage number or in sales conditions of commodities for sale.
